# EUROPEAN PATENT APPLICATION

(11) **EP 4 835 631 A1**
(43) Date of publication of application: **04.11.2026**
(21) Application number: 24910171.8
(22) Date of filing: 16.10.2024
(51) Int. Cl.: G06F 3/0481

(54) **PAGE INTERACTION METHOD AND APPARATUS, DEVICE, AND STORAGE MEDIUM**

(30) Priority: 29.12.2023 CN 202311863187
(71) Applicant: Beijing Zitiao Network Technology Co., Ltd., Beijing 100190 (CN)
(72) Inventor: GONG, Xinyuan, Beijing 100028 (CN); GUAN, Sainan, Beijing 100028 (CN); LI, JiangLei, Beijing 100028 (CN)
(74) Representative: Grünecker Patent- und Rechtsanwälte PartG mbB
(86) International application number: PCT/CN2024/125378
(87) International publication number: WO 2025/139229

(57) **Abstract**

The disclosure provides a method, an apparatus, a device and a storage medium for page interaction. A method includes: displaying a resource interaction success page in response to an interaction success message for a target resource object. At least one recommendation object is presented on the resource interaction success page. The recommendation object has a predetermined interaction relationship with the target resource object. Then an interaction page corresponding to a target recommendation object is displayed in response to a trigger operation for the target recommendation object in the at least one recommendation object. The interaction page supports triggering an interaction operation corresponding to the predetermined interaction relationship for the target resource object. It can be seen that, the embodiments of the present disclosure remind a user to trigger an interaction operation for a target resource object through a recommendation object by presenting the recommendation object that has a predetermined interaction relationship with the target resource object on a resource interaction success page, so that the page interaction manner is enriched, and the user experience is improved.

## Description

This application claims the priority of Chinese Patent Application No. 202311863187.3, filed on Dec. 29, 2023, entitled "METHOD, APPARATUS, DEVICE AND STORAGE MEDIUM FOR PAGE INTERACTION", the entire content of which is incorporated herein by reference.

### FIELD

The present disclosure relates to the field of data processing, in particular to a method, an apparatus, a device and a storage medium for page interaction.

### BACKGROUND

With the continuous development of computer technologies, more and more page interaction manners are supported by various application programs. Users' demands for page interaction manners have become increasingly diversified, such as their demands for page interaction manners related to recharging resource.

In order to meet the growing diversified page interaction demands of users, how to enrich page interaction manners is a technical problem that needs to be solved urgently.

### SUMMARY

In order to solve the above technical problem. Embodiments of the present disclosure provide a method, an apparatus, a device and a storage medium for page interaction.

According to a first aspect, the present disclosure provides a page interaction method, including:
displaying a resource interaction success page in response to an interaction success message for a target resource object, where at least one recommendation object is presented on the resource interaction success page, the recommendation object has a predetermined interaction relationship with the target resource object;
displaying an interaction page corresponding to a target recommendation object in response to a trigger operation for the target recommendation object in the at least one recommendation object; where the interaction page supports triggering an interaction operation corresponding to the predetermined interaction relationship for the target resource object.

In an optional implementation, the at least one recommendation object includes a live streaming room object, displaying the interaction page corresponding to the target recommendation object in response to the trigger operation for the target recommendation object in the at least one recommendation object includes:
jumping from a current display page to a live streaming room page corresponding to the live streaming room object in response to a trigger operation for the live streaming room object in the at least one recommendation object.

In an optional implementation, the live streaming room object in the at least one recommendation object is determined by at least one type of information of: a viewing behavior information based on a current account user, an interaction behavior information for the target resource object, a live streaming room following information, and a live streaming room favoriting information, and the live streaming room object is currently in a live streaming state.

In an optional implementation, the at least one recommendation object includes a function control; displaying the resource interaction success page in response to a resource interaction success message includes :
determining, in response to an interaction success message for a target resource object, whether a current display page belongs to a live streaming room page;
displaying, in accordance with a determination that the current display page belongs to a live streaming room page, a resource interaction success page, and presenting, on the resource interaction success page, a function control for a live streaming room object corresponding to the current display page.

Correspondingly, displaying the interaction page corresponding to the target recommendation object in response to the trigger operation for the target recommendation object in the at least one recommendation object includes :
displaying, in response to a trigger operation for a function control in the at least one recommendation object, an interaction page corresponding to the function control on the current display page, where the interaction page supports triggering an interaction operation corresponding to the function control for the target resource object.

In an optional implementation, the function control includes an interaction object transfer control, displaying the interaction page corresponding to the function control on the current display page in response to the trigger operation for the function control in the at least one recommendation object includes :
displaying, in response to a trigger operation for an interaction object transfer control in the at least one recommendation object, a resource presenting panel on the current display page; where the resource presenting panel is configured to support a trigger operation of transferring an interaction object to the live streaming room object based on the target resource object.

In an optional implementation, the interaction object transfer control is configured with a target interaction object, the interaction object transfer control being configured to trigger a transfer operation for the target interaction object.

In an optional implementation, the method further includes: before displaying the resource interaction success page in response to the resource interaction success message,
displaying a resource interaction panel in response to a trigger operation for a resource interaction control; where a plurality of resource levels are presented on the resource interaction panel;
displaying, in response to a selection operation for a target resource level of the plurality of resource levels, a resource code image corresponding to the target resource level on the resource interaction panel additionally, where the resource code image is configured to interact for a resource amount corresponding to the target resource level.

In an optional implementation, displaying the resource interaction panel in response to the trigger operation for the resource interaction control includes :
displaying a resource interaction panel in response to a target object hovering within a display area of the resource interaction control;
correspondingly, the method further includes :
   hiding the resource interaction panel in response to the target object moving out of the display area.

In a second aspect, the present disclosure further provides a page interaction apparatus, including:
a first display module, configured to display a resource interaction success page in response to an interaction success message for a target resource object, where at least one recommendation object is presented on the resource interaction success page, the recommendation object has a predetermined interaction relationship with the target resource object corresponding to the resource interaction success message;
a second display module, configured to display an interaction page corresponding to a target recommendation object in response to a trigger operation for the target recommendation object in the at least one recommendation object; where the interaction page supports triggering an interaction operation corresponding to the predetermined interaction relationship for the target resource object.

According to a third aspect, the present disclosure provides a computer-readable storage medium. The computer-readable storage medium has stored therein instructions that, when executed on a terminal device, causing the terminal device to implement the above method.

According to a fourth aspect, the present disclosure provides a page interaction device. The page interaction device includes: a memory, a processor, and a computer program stored on the memory and executable on the processor that, when the computer program being executed by the processor, implementing the above method.

According to a fifth aspect, the present disclosure provides a computer program product. The computer program product includes computer programs/instructions that, when the computer programs/instructions being executed by a processor, implementing the above method.

### BRIEF DESCRIPTION OF DRAWINGS

The drawings herein are incorporated in and constitute a part of the description, illustrating embodiments consistent with the present disclosure and, together with the description, serve to explain the principles of the present disclosure.

In order to more clearly illustrate the embodiments of the present disclosure or the technical solutions in the prior art, the accompanying drawings need to be used in the description of the embodiments or the prior art will be briefly introduced below. It will be apparent that those skilled in the art may obtain other drawings according to these drawings without creative labor.
FIG. 1 is a flowchart of a page interaction method provided by an embodiment of the present disclosure;
FIG. 2 is a schematic diagram of a resource interaction success page provided by an embodiment of the present disclosure;
FIG. 3 is a schematic diagram of a resource interaction panel provided by an embodiment of the present disclosure;
FIG. 4 is a schematic diagram of another resource interaction panel provided by an embodiment of the present disclosure;
FIG. 5 is a schematic diagram of a live streaming room page provided by an embodiment of the present disclosure;
FIG. 6 is a schematic diagram of another live streaming room page provided by an embodiment of the present disclosure;
FIG. 7 is a schematic diagram of a resource presenting panel provided by an embodiment of the present disclosure;
FIG. 8 is a schematic diagram of still another live streaming room page provided by an embodiment of the present disclosure;
FIG. 9 is a schematic structural diagram of a page interaction apparatus provided by an embodiment of the present disclosure;
FIG. 10 is a schematic structural diagram of a page interaction device provided by an embodiment of the present disclosure.

### DETAILED DESCRIPTION

In order to be able to more clearly understand the above objects, features and advantages of the present disclosure, the solutions of the present disclosure will be further described below. It should be noted that, in the case of no conflict, the features in the embodiments and embodiments of the present disclosure may be combined with each other.

Many specific details are set forth in the following description to facilitate a thorough understanding of the present disclosure, but the present disclosure may also be implemented in other ways other than those described herein; it is apparent that the embodiments in the specification are only part of the embodiments of the present disclosure, not all embodiments.

With the continuous development of computer technologies, more and more page interaction manners are supported by various application programs. Users' demands for page interaction manners have become increasingly diversified, such as their demands for page interaction manners related to recharging resource.

Therefore, how to meet the growing diversified page interaction demands of users and further enrich page interaction manners is a technical problem that needs to be solved urgently.

For this, embodiments of the present disclosure provide a page interaction method. Specifically, a resource interaction success page is displayed in response to an interaction success message for a target resource object, where at least one recommendation object is presented on the resource interaction success page. The recommendation object has a predetermined interaction relationship with the target resource object. Then an interaction page corresponding to a target recommendation object is displayed in response to a trigger operation for the target recommendation object in the at least one recommendation object, where the interaction page supports triggering an interaction operation corresponding to the predetermined interaction relationship for the target resource object.

It can be seen that, the embodiments of the present disclosure remind a user to trigger an interaction operation for a target resource object through a recommendation object by presenting the recommendation object that has a predetermined interaction relationship with the target resource object on a resource interaction success page, so that the page interaction manner is enriched, and the user experience is improved.

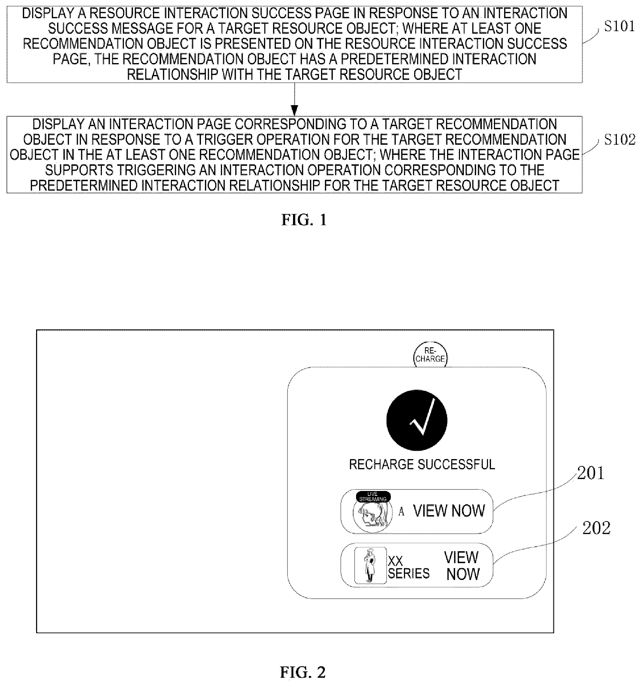

Specifically, the embodiments of the present disclosure provide a page interaction method. Referring to FIG. 1, FIG. 1 is a flowchart of a page interaction method provided by an embodiment of the present disclosure, including specifically:
S101: a resource interaction success page is displayed in response to an interaction success message for a target resource object.

Here, at least one recommendation object is presented on the resource interaction success page. The recommendation object has a predetermined interaction relationship with the target resource object.

The page interaction method provided in the embodiments of the present disclosure may be applied to a client, where the client may be deployed in a terminal such as a smartphone or a tablet computer.

In the embodiments of the present disclosure, the target resource object may be any type of resource, for example, virtual currency or the like.

In the embodiments of the present disclosure, after receiving an interaction success message for the target resource object, a resource interaction success page is displayed. The resource interaction success message is configured to remind that the target resource object has interacted successfully. At least one recommendation object is presented on the resource interaction success page. The recommendation object has a predetermined interaction relationship with the target resource object. The predetermined interaction relationship is configured to indicate that a corresponding interaction operation may be executed on the recommendation object by using the target resource object.

In an optional implementation, after receiving an interaction success message for the target resource object, a resource interaction success page is displayed on the current display page, and at least one recommendation object is presented on the resource interaction success page, where the current display page may be any interaction page.

FIG. 2 is a schematic diagram of a resource interaction success page provided by an embodiment of the present disclosure. At least one recommendation object is displayed on the resource interaction success page, such as a recommendation object 201 and a recommendation object 202.

In the embodiments of the present disclosure, to interact for the target resource object, a resource interaction panel needs to be displayed first to implement an interaction function for the target resource object. Here, an interaction for the target resource object may include an interaction operation for increasing a quantity of the target resource object (that is, resource amount) of the current user account, for example, recharging for the target resource object.

Specifically, when a trigger operation for a resource interaction control is received, a resource interaction panel is displayed, where a plurality of resource levels are presented on the resource interaction panel, where resource levels presented on the resource interaction panel is configured to indicate resource amount. That is, the higher the resource level, the larger the corresponding resource amount, and the lower the resource level, the lower the corresponding resource amount.

In addition, assuming that the resource interaction panel is a resource recharge panel, a recharge center entry may also be displayed on the resource recharge panel, to facilitate the user to enter the recharge center page based on the resource recharge panel.

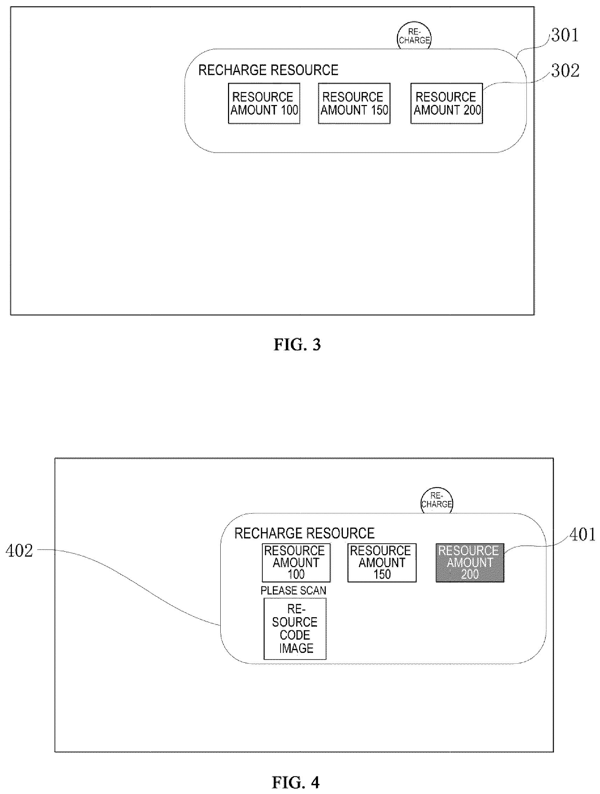

As shown in FIG. 3, FIG. 3 is a schematic diagram of a resource interaction panel provided by an embodiment of the present disclosure. When a trigger operation for a resource interaction control is received, a resource interaction panel 301 is displayed. Resource levels 302 are displayed on the resource interaction panel.

In an optional implementation, when a selection operation for a target resource level of a plurality of resource levels is received, a resource code image corresponding to the target resource level is displayed additionally on the resource interaction panel, where the resource code image is configured to interact for a resource amount corresponding to the target resource level. The image resource code is specifically, for example, a QR code.

In other words, when a target resource level is selected, a resource code image corresponding to the target resource level is displayed additionally on the resource interaction panel. The interaction of a resource amount corresponding to the target resource level can be completed by triggering the resource code image. The specific operation for triggering a resource code image may be scanning the resource code image through a mobile terminal device such as a mobile phone, which is not limited in the embodiments of the present disclosure.

As shown in FIG. 4, FIG. 4 is a schematic diagram of another resource interaction panel provided by an embodiment of the present disclosure. A plurality of resource levels are presented on the resource interaction panel. When a target resource level 401 is selected, a resource code image 402 corresponding to the target resource level is displayed on the resource interaction panel additionally.

In an optional implementation, a trigger operation for a resource interaction control may include: a target object hovering within a display area of the resource interaction control. Specifically, when the target object hovering within a display area of the resource interaction control is received, the resource interaction panel is directly displayed. When the target object moving out of the display area is received, the resource interaction panel is hidden. Here, the target object may specifically be an object such as a mouse or a cursor.

S102: an interaction page corresponding to a target recommendation object is displayed in response to a trigger operation for the target recommendation object in the at least one recommendation object.

Here, the interaction page supports triggering an interaction operation corresponding to the predetermined interaction relationship for the target resource object.

Here, the interaction page supports triggering an interaction operation corresponding to the predetermined interaction relationship for the target resource object. That is, an interaction operation corresponding to the predetermined interaction relationship may be executed on the interaction page according to the target resource object.

In the embodiments of the present disclosure, the target recommendation object is any one of the recommendation objects. The interaction page corresponding to the target recommendation object is displayed by triggering the target recommendation object.

In an optional implementation, when a resource interaction success message is received, a resource interaction success page is displayed. At least one recommendation object is presented on the resource interaction success page. The at least one recommendation object includes a live streaming room object. Specifically, when a trigger operation for a live streaming room object is received, a current display page jumps to a live streaming room page corresponding to a live streaming room object. Here, the live streaming room object may specifically be any live streaming room. Specifically, information of a live streaming room object presented on a resource interaction success page may include a user live streaming avatar, a live streaming identification, and a live streaming room name of the live streaming room object. By triggering the live streaming room object, the current display page jumps to a corresponding live streaming room page.

In practical applications, to support that a recommendation object is more in line with users' demands, a recommendation object may be related to interaction behavior information of the current account user. In the implementation of the present disclosure, a determination for a live streaming room object, may be determined by at least one type of information of viewing behavior information, interaction behavior information for a target resource object, live streaming room follow information, and live streaming room bookmark information of the user of the current account, and the live streaming room object is currently in a live state. Specifically, the order of the one or more recommendation objects presented on the resource interaction success page may be determined by setting priorities

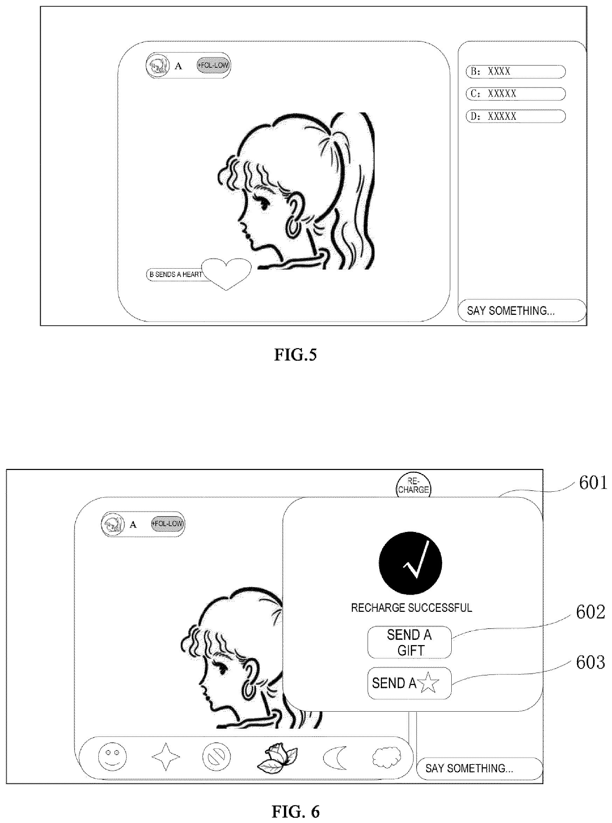

The recommendation object 201 presented on the resource interaction success page shown in FIG. 2 is a live streaming room object. By triggering the live streaming room object, the current display page jumps to a live streaming room page. As shown in FIG. 5, FIG. 5 is a schematic diagram of a live streaming room page provided by an embodiment of the present disclosure.

In another optional implementation, when a resource interaction success message is received, a resource interaction success page is displayed. At least one recommendation object is displayed on the resource interaction success page. The at least one recommendation object includes a video object. Specifically, when a trigger operation for a video object is received, a current display page jumps to a video playing page corresponding to the video object. Here, a video object may specifically be a paid video such as a series. Specifically, information of the video object displayed on the resource interaction success page may include a video cover image, a video name, and the like. By triggering the video object, the current display page jumps to a corresponding video playing page.

Here, a video object may be determined according to at least one type of information of video playing information, interaction behavior information for a target resource object, video follow information, and the video bookmark information of the current account user.

The recommended object 202 presented on the resource interaction success page shown in FIG. 2 is a video object. By triggering the video object, the current display page jumps to a corresponding video playing page.

In an optional implementation, the at least one recommendation object presented on the resource interaction success page may further include a function control.

Specifically, when a resource interaction success message is received, whether a current page belongs to a live streaming room page is determined. In accordance with a determination that the current display page belongs to a live streaming room page, a resource interaction success page is displayed and a function control for a live streaming room object corresponding to the current display page is presented on the resource interaction success page. Then, when a trigger operation for the function control in the at least one recommendation object is received, an interaction page corresponding to the function control is displayed on the current display page, where the interaction page supports triggering an interaction operation corresponding to the function control for the target resource object.

As shown in FIG. 6, FIG. 6 is a schematic diagram of another live streaming room page provided by an embodiment of the present disclosure. A resource interaction success page 601 is displayed on the live streaming room page. A function control 602 and a function control 603 of a live streaming room object corresponding to a current live streaming room page are displayed on the resource interaction success page. When a trigger operation for the function control 602 is received, an interaction page corresponding to the function control is displayed on the live streaming room page.

In an optional implementation, the function control in the at least one recommendation object may include an interaction object transfer control. Specifically, when a trigger operation for an interaction object transfer control in the at least one recommendation object is received, a resource presenting panel is displayed on the current display page, where the resource presenting panel is configured to support a trigger operation of transferring an interaction object to the live streaming room object based on the target resource object.

Here, the interaction object is a virtual resource that may interact based on a target resource object, Specifically, for example, "send a gift", "join a streamer's fan club", and the like.

As the function control 602 in the live streaming room page shown in FIG. 6, when a trigger operation for the function control is received, a resource presenting panel is displayed. At least one interaction object is presented on the resource presenting panel.

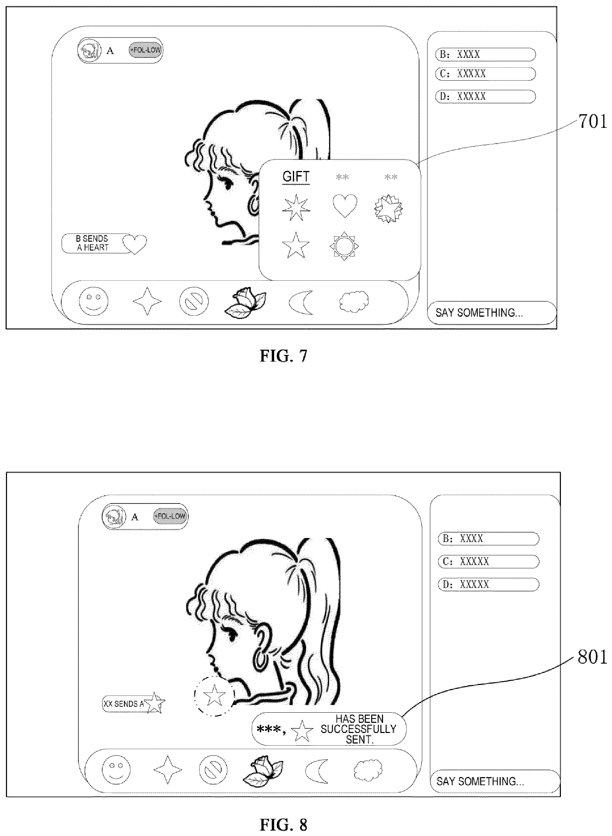

As shown in FIG. 7, FIG. 7 is a schematic diagram of a resource presenting panel provided by an embodiment of the present disclosure. A plurality of interaction objects are presented on the resource presenting panel 701.

In the embodiments of the present disclosure, an interaction object transfer control may further be an interaction object transfer control configured with a target interaction object, where the target interaction object is an interaction object on the resource presenting panel.

Specifically, if a trigger operation for an interaction object transfer control in the at least one recommendation object is received, a target interaction object is transferred to a live streaming room object, and a resource dynamic effect corresponding to the target interaction object and an interaction object reminder message are presented on the live streaming room page. Here, the resource dynamic effect is configured to present a use effect of the target interaction object. The interaction object reminder message is configured to remind the user that the target interaction object has been transferred to the live streaming room object. The interaction object transfer control is configured to trigger a transfer operation for the target interaction object.

As the function control 603 in the live streaming room page shown in FIG. 6, the function control is an interaction object transfer control, and the interaction object transfer control is configured with a target interaction object. When a trigger operation for the interaction object transfer control is received, a resource dynamic effect corresponding to the target interaction object and an interaction object reminder message are presented on the live streaming room page. As shown in FIG. 8, FIG. 8 is a schematic diagram of a live streaming room page provided by an embodiment of the present disclosure. A resource dynamic effect and an interaction object reminder message 801 are displayed on the live streaming room page.

In the page interaction method provided by the embodiments of the present disclosure, first, in response to a resource interaction success message, a resource interaction success page is displayed, where at least one recommendation object is displayed on the resource interaction success page. The recommendation object has a predetermined interaction relationship with the target resource object. Then, in response to a trigger operation for the target recommendation object in the at least one recommendation object, an interaction page corresponding to the target recommendation object is displayed, where the interaction page supports triggering an interaction operation corresponding to the predetermined interaction relationship for the target resource object.

The embodiments of the present disclosure remind a user to trigger an interaction operation for a target resource object through a recommendation object by presenting the recommendation object that has a predetermined interaction relationship with the target resource object on a resource interaction success page, so that the page interaction manner is enriched, and the user experience is improved.

For ease of understanding the foregoing embodiments, the present disclosure will describe the page interaction method provided by the embodiments of the present disclosure by taking a PC end as an example.

First, if a target object hovering within a display area of the resource interaction control is detected, a resource interaction panel is displayed. A plurality of resource levels are presented on the resource interaction panel. At this time, if the target object moving out of the display area of the resource interaction control is detected, the resource interaction panel is hidden.

In a case where a target object hovers over a display area of a resource interaction control, a resource interaction panel is displayed. A plurality of resource levels are presented on the resource interaction panel. When a selection operation for a target resource level is triggered, a resource code image corresponding to the target resource level is displayed on the resource interaction panel additionally. An interaction for a resource amount corresponding to the target resource level is triggered by using the resource code image.

In an application scenario, when a resource interaction success message is received, a resource interaction success page is displayed, and at least one recommendation object is presented on the resource interaction success page. The recommendation object has a predetermined interaction relationship with the target resource object.

When there is a live streaming room object in the at least one recommendation object, if a trigger operation for the live streaming room object is received. A current display page jumps to a live streaming room page corresponding to the live streaming room object.

In another application scenario, when a resource interaction success message is received, whether a current page belongs to a live streaming room page is determined. In accordance with a determination that the current display page belongs to a live streaming room page, a resource interaction success page is displayed and a function control for a live streaming room object corresponding to the current display page is presented on the resource interaction success page.

Specifically, if the function control includes the interaction object transfer control is detected, when a trigger operation for the interaction object transfer control is received, a resource presenting panel is presented on the current display page. At least one interaction object is presented on the resource presenting panel. The interaction object presented on the resource presenting panel may be transferred to a live streaming room object according to a target resource object.

If the function control includes an interaction object transfer control is detected and the interaction object transfer control is configured with a target interaction object, when a trigger operation for the interaction object transfer control is received, the target interaction object is transferred to a live streaming room object, and a resource dynamic effect and an interaction object reminder message are displayed on the current display page.

The embodiments of the present disclosure remind a user to trigger an interaction operation for a target resource object through a recommendation object by presenting the recommendation object that has a predetermined interaction relationship with the target resource object on a resource interaction success page, so that the page interaction manner is enriched, and the user experience is improved.

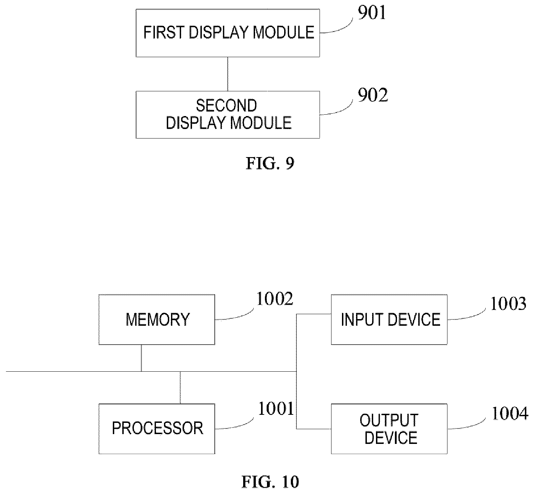

Based on the foregoing method embodiments, the present disclosure further provides a page interaction apparatus. Referring to FIG. 9, FIG. 9 is a schematic structural diagram of a page interaction apparatus provided by an embodiment of the present disclosure. The apparatus includes:
a first display module 901, configured to display a resource interaction success page in response to an interaction success message for a target resource object, where at least one recommendation object is presented on the resource interaction success page, the recommendation object has a predetermined interaction relationship with the target resource object;
a second display module 902, configured to display an interaction page corresponding to a target recommendation object in response to a trigger operation for the target recommendation object in the at least one recommendation object; where the interaction page supports triggering an interaction operation corresponding to the predetermined interaction relationship for the target resource object.

In an optional implementation, the at least one recommendation object includes a live streaming room object, and the second display module is specifically configured to:
jump from a current display page to a live streaming room page corresponding to the live streaming room object in response to a trigger operation for the live streaming room object in the at least one recommendation object.

In an optional implementation, the live streaming room object in the at least one recommendation object is determined by at least one type of information of: a viewing behavior information based on a current account user, an interaction behavior information for the target resource object, a live streaming room following information, and a live streaming room favoriting information, and the live streaming room object is currently in a live streaming state.

In an optional implementation, the at least one recommendation object includes a function control. The first display module includes:
A determining sub-module, configured to determine, in response to an interaction success message for a resource, whether a current display page belongs to a live streaming room page;
A first display submodule, configured to display, when the current display page belonging to a live streaming room page is determined, a resource interaction success page, and presenting, on the resource interaction success page, a function control for a live streaming room object corresponding to the current display page.

Correspondingly, the second display module is specifically configured to:
display, in response to a trigger operation for a function control in the at least one recommendation object, an interaction page corresponding to the function control on the current display page, where the interaction page supports triggering an interaction operation corresponding to the function control for the target resource object.

In an optional implementation, the function control includes an interaction object transfer control. The second display module is specifically configured to:
display, in response to a trigger operation for an interaction object transfer control in the at least one recommendation object, a resource presenting panel on the current display page; where the resource presenting panel is configured to support a trigger operation of transferring an interaction object to the live streaming room object based on the target resource object.

In an optional implementation, the interaction object transfer control is configured with a target interaction object, the interaction object transfer control being configured to trigger a transfer operation for the target interaction object.

In an optional implementation, the apparatus further includes:
A third display module, configured to display a resource interaction panel in response to a trigger operation for a resource interaction control; where a plurality of resource levels are presented on the resource interaction panel;
A fourth display module, configured to display, in response to a selection operation for a target resource level of the plurality of resource levels, a resource code image corresponding to the target resource level on the resource interaction panel additionally, where the resource code image is configured to interact for a resource amount corresponding to the target resource level.

In an optional implementation, the third display module is specifically configured to:
display a resource interaction panel in response to a target object hovering within a display area of the resource interaction control;
correspondingly, the apparatus further includes:
   a hiding module, configured to hide the resource interaction panel in response to the target object moving out of the display area.

The embodiments of the present disclosure provide a page interaction apparatus. Specifically, a resource interaction success page is displayed in response to an interaction success message for a target resource object, where at least one recommendation object is presented on the resource interaction success page. The recommendation object has a predetermined interaction relationship with the target resource object. Then an interaction page corresponding to a target recommendation object is displayed in response to a trigger operation for the target recommendation object in the at least one recommendation object, where the interaction page supports triggering an interaction operation corresponding to the predetermined interaction relationship for the target resource object.

It can be seen that, the embodiments of the present disclosure remind a user to trigger an interaction operation for a target resource object through a recommendation object by presenting the recommendation object that has a predetermined interaction relationship with the target resource object on a resource interaction success page, so that the page interaction manner is enriched, and the user experience is improved.

In addition to the above method and apparatus, the embodiments of the present disclosure further provide a computer-readable storage medium. The computer-readable storage medium has stored therein instructions that, when executed on a terminal device, causing the terminal device to implement the page interaction method according to the embodiments of the present disclosure.

The embodiments of the present disclosure further provide a computer program product. The computer program product includes computer programs/instructions that, when executed by a processor, implementing the page interaction method according to the embodiments of the present disclosure.

In addition, an embodiment of the present disclosure further provides a page interaction device, as shown in FIG. 10, which may include:
A processor 1001, a memory 1002, an input device 1003, and an output device 1004. The number of processors 1001 in the page interaction device may be one or more, and one processor is used as an example in FIG. 10. In some embodiments of the present disclosure, the processor 1001, the memory 1002, the input device 1003, and the output device 1004 may be connected via a bus or in other manners, where connection via a bus is taken as an example in Figure 10.

The memory 1002 may be configured to store software programs and modules. The processor 1001 executes various functional applications and data processing of the page interaction device by running software programs and modules stored in the memory 1002. The memory 1002 may mainly include a program storage area and a data storage area, where the storage program area may store an operating system, application programs required by at least one function, and the like. In addition, the memory 1002 may include a high-speed random access memory, or may include a non-volatile memory, for example, at least one magnetic disk storage device, a flash memory device, or another volatile solid-state storage device. The input device 1003 may be configured to receive inputted digit information or character information, and generate signal input related to user settings and function control of the page interaction device.

Specifically, in this embodiment, the processor 1001 loads the executable file corresponding to the process of one or more application programs into the memory 1002 according to the following instruction, and runs the application program stored in the memory 1002 by the processor 1001, thereby implementing various functions of the above page interaction device.

It should be noted that, relational terms herein such as "first" and "second" are merely used to distinguish one entity or operation from another entity or operation, and do not necessarily require or imply that any such actual relationship or order exists between these entities or operations. Moreover, the terms "comprise," "contain," or any other variation thereof are intended to cover a non-exclusive inclusion, such that a process, method, article, or device including a series of elements includes not only those elements, but also other elements not explicitly listed, or elements inherent to such a process, method, article, or device. Without further restriction, the elements defined by the statement "include one" do not exclude the presence of additional identical elements in the process, method, article, or device that includes the elements.

The above descriptions are only specific embodiments of the present disclosure, so that those skilled in the art can understand or implement the present disclosure. Various modifications to these embodiments will be apparent to those skilled in the art. The general principles defined herein may be implemented in other embodiments without departing from the spirit or scope of the present disclosure. Therefore, the present disclosure will not be limited to these embodiments described herein, but is to comply with the widest scope consistent with the principles and novel features disclosed herein.

## Claims

1. A page interaction method, comprising:
displaying a resource interaction success page in response to an interaction success message for a target resource object, wherein at least one recommendation object is presented on the resource interaction success page, the recommendation object has a predetermined interaction relationship with the target resource object;
displaying an interaction page corresponding to a target recommendation object in response to a trigger operation for the target recommendation object in the at least one recommendation object; wherein the interaction page supports triggering an interaction operation corresponding to the predetermined interaction relationship for the target resource object.

2. The method of claim 1, wherein the at least one recommendation object comprises a live streaming room object, displaying the interaction page corresponding to the target recommendation object in response to the trigger operation for the target recommendation object in the at least one recommendation object comprises:
jumping from a current display page to a live streaming room page corresponding to the live streaming room object in response to a trigger operation for the live streaming room object in the at least one recommendation object.

3. The method of claim 2, wherein the live streaming room object in the at least one recommendation object is determined by at least one type of information of: a viewing behavior information based on a current account user, an interaction behavior information for the target resource object, a live streaming room following information, and a live streaming room favoriting information, and the live streaming room object is currently in a live streaming state.

4. The method of claim 1, wherein the at least one recommendation object comprises a function control; displaying the resource interaction success page in response to the interaction success message for the target resource object comprises:
determining, in response to an interaction success message for a target resource object, whether a current display page belongs to a live streaming room page;
displaying, in accordance with a determination that the current display page belongs to a live streaming room page, a resource interaction success page, and presenting, on the resource interaction success page, a function control for a live streaming room object corresponding to the current display page;
correspondingly, displaying the interaction page corresponding to the target recommendation object in response to the trigger operation for the target recommendation object in the at least one recommendation object comprises:
displaying, in response to a trigger operation for a function control in the at least one recommendation object, an interaction page corresponding to the function control on the current display page, wherein the interaction page supports triggering an interaction operation corresponding to the function control for the target resource object.

5. The method of claim 4, wherein the function control comprises an interaction object transfer control, displaying the interaction page corresponding to the function control on the current display page in response to the trigger operation for the function control in the at least one recommendation object comprises:
displaying, in response to a trigger operation for an interaction object transfer control in the at least one recommendation object, a resource presenting panel on the current display page; wherein the resource presenting panel is configured to support a trigger operation of transferring an interaction object to the live streaming room object based on the target resource object.

6. The method of claim 5, wherein the interaction object transfer control is configured with a target interaction object, the interaction object transfer control being configured to trigger a transfer operation for the target interaction object.

7. The method of claim 1, wherein the method further comprises: before displaying the resource interaction success page in response to the interaction success message for the target resource object,
displaying a resource interaction panel in response to a trigger operation for a resource interaction control; wherein a plurality of resource levels are presented on the resource interaction panel;
displaying, in response to a selection operation for a target resource level of the plurality of resource levels, a resource code image corresponding to the target resource level on the resource interaction panel additionally, wherein the resource code image is configured to interact for a resource amount corresponding to the target resource level.

8. The method of claim 7, wherein displaying the resource interaction panel in response to the trigger operation for the resource interaction control comprises:
displaying a resource interaction panel in response to a target object hovering within a display area of the resource interaction control;
correspondingly, the method further comprises:
hiding the resource interaction panel in response to the target object moving out of the display area.

9. A page interaction apparatus, comprising:
a first display module, configured to display a resource interaction success page in response to an interaction success message for a target resource object, wherein at least one recommendation object is presented on the resource interaction success page, the recommendation object has a predetermined interaction relationship with the target resource object;
a second display module, configured to display an interaction page corresponding to a target recommendation object in response to a trigger operation for the target recommendation object in the at least one recommendation object; wherein the interaction page supports triggering an interaction operation corresponding to the predetermined interaction relationship for the target resource object.

10. A computer-readable storage medium having stored therein instructions that, when executed on a terminal device, causing the terminal device to implement the method of any of claims 1-8.

11. A page interaction device, comprising: a memory, a processor, and a computer program stored on the memory and executable on the processor that, when the computer program being executed by the processor, implementing the method of any of claims 1-8.
